# EUROPEAN PATENT SPECIFICATION

(11) **EP 3 029 875 B1**
(45) Date of publication and mention of the grant of the patent: **17.05.2017**
(21) Application number: 15196640.5
(22) Date of filing: 26.09.2012
(51) Int. Cl.: H04L 5/00, H04L 25/03, H04W 24/08

(54) **METHOD AND DEVICE FOR INTERFERENCE CONTROL**
VERFAHREN UND VORRICHTUNG ZUR INTERFERENZSTEUERUNG
PROCÉDÉ ET DISPOSITIF DE RÉDUCTION DU BROUILLAGE

(30) Priority: 26.09.2011 CN 201110287939
(43) Date of publication of application: 08.06.2016
(62) Divisional of application: 12837011.1
(73) Proprietor: Huawei Technologies Co., Ltd., Longgang District Shenzhen, Guangdong 518129 (CN)
(72) Inventor: CHAI, Li, 518129 Shenzhen (CN); YU, Zheng, 518129 Shenzhen (CN); LIN, Bo, 518129 Shenzhen (CN); MA, Sha, 518129 Shenzhen (CN)
(74) Representative: Maiwald Patentanwalts GmbH

(56) References cited:
- WO-A1-2011/100676
- WO-A2-2011/108889
- CATT: "Consideration on Available and Further Techniques for CRS Interference Mitigation", 3GPP DRAFT; R1-105936, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 9 November 2010 (2010-11-09), XP050466750,

## Description

### CROSS-REFERENCE TO RELATED APPLICATION

### TECHNICAL FIELD

Embodiments of the present invention relate to the field of wireless communications, and in particular, to an interference control method and device in a wireless communication system.

### BACKGROUND

A wireless communication system can provide wireless services such as voice and data. Generally, a wireless communication system is a multiple access wireless system. In a wireless communication system, a base station transmits data and/or control information to a user equipment on a downlink, and receives data and/or control information of the user equipment on an uplink. Similarly, the user equipment (User Equipment, UE for short) transfers the data and/or control information for the base station on the uplink, and receives the data and/or control information transmitted by the base station on the downlink. In the following, a long term evolution (Long Term Evolution, LTE for short) and/or long term evolution advanced (Long Term Evolution Advanced, LTE-A for short) wireless communication system is taken as an example to illustrate the technical background of the present invention.

In order to meet or improve the performance requirement of the LTE-A, base stations (such as base stations or transmitting/receiving nodes with low transmit power) of different types or different standards are deployed in a homogeneous network (homogeneous network), so as to enhance the coverage and performance of a network, and such a network structure is called as a heterogeneous network (Heterogeneous network). In the following, a situation where a base station with high transmit power, such as a macro base station and a base station with low transmit power (a lower power node for short, lower power node, LPN) that adopts the same standard as but is of a different type from the macro base station (MeNB) are deployed in the heterogeneous network is taken as an example to further illustrate the technical background of the present invention.

In order to improve the spectrum utilization efficiency of a system, spectrum multiplexing may be completely or partially performed on an uplink and/or downlink spectrum resource configurable for an LPN and an uplink and/or downlink spectrum resource configurable for an MeNB. At this time, because the LPN is configured with the same or partially same spectrum resource as the MeNB, intra-channel (intra-frequency) interference is generated in downlink (or uplink) channel transmission of the LPN (or a UE served by the LPN) and the MeNB (or a UE served by the MeNB). The interference affects the reliability of the downlink channel transmission and the uplink channel (the channel includes a control channel and a data channel) detection of the LPN and the MeNB.

Currently, in the LTE-A standard, a time division multiplexing (Time Division Multiplexing, TDM for short) inter-cell interference coordination (Inter Cell Interference Coordination, ICIC for short) method is adopted to process interference between cells in a heterogeneous network scenario. An interfering base station sets some subframes to have low transmission power or not to perform service transmission (that is, transmission power of a service is zero), and the subframe may be called as an almost blank subframe (Almost Blank Subframe, ABS for short). An interfered base station schedules a UE strongly interfered with by an interfering base station to perform service transmission on a subframe corresponding to an ABS subframe configured by the interfering base station, so as to guarantee the transmission performance of a victim UE of the interfered base station. However, for the backward compatibility, the ABS subframe still sends cell reference signaling (Cell Reference Signaling, CRS for short) and other necessary control information such as synchronization signaling and a system message. In a situation where an edge of a cell is strongly interfered with, CRS signaling of an ABS subframe of a neighboring cell still causes a huge threat to decoding of signaling/data on a downlink physical downlink control channel (Physical Downlink Control Channel, PDCCH for short) and a physical downlink shared channel (Physical Downlink Share Channel, PDSCH for short) by a UE in an interfered cell. Therefore, a technical solution to solve the interference problem is required.

3GPP draft R1-105936 discloses that according to RAN1 discussion, available solutions for CRS interference mitigation include UE receiver RS-IC. Assuming the system parameters of aggressor cell such as cell-ID, antenna port number are available at victim UE, UE can regenerate reference signal of a certain aggressor cell and its time/frequency locations to perform interference cancellation.

WO 2011/108889 A2 discloses an apparatus and method for controlling inter-cell interference. The user equipment for controlling inter-cell interference in a wireless communication system includes an interference level measuring module configured to measure interference levels of neighboring cells using at least one of information about the number of antennas among antennas deployed in the neighboring cells, information about indexes of the effective antennas, and information about reference signal of the neighboring cells, an interference restriction request determination module configured to compare the interference levels of the neighboring cells with a predetermined threshold and to determine whether or not UE requests an interference restriction to the neighboring cells, and a transmitter configured to transmit information about one or more neighboring cells, to which the interference restriction request will be transmitted, to a serving base station.

WO 2011/100676 A1 discloses a system and method for broadcasting a channel state information reference signal, CSI-RS. A CSI-RS that is orthogonal to CSI-RSs transmitted by each of a first network cell and each of a set of neighbor cells that interfere with the first network cell is identified. In one implementation, the first network cell has a coverage containing a coverage of a second network cell. The method includes transmitting, from the second network cell, the CSI-RS that is orthogonal to CSI-RSs transmitted by each of the first network cell and each of a set of interfering neighbor cells.

### SUMMARY

Objectives of embodiments of the present invention are to provide a method and device that are capable of reducing neighboring cell interference.

According to an embodiment of the present invention, an interference control method is provided, according to claim 1.

According to an embodiment of the present invention, a base station is provided, according to claim 5.

According to an embodiment of the present invention, a user equipment is provided, according to claim 7.

According to the embodiments of the present invention, interference of a signal of a neighboring cell to a user equipment in a serving cell is reduced, the communication quality of the user equipment in the serving cell is improved, and some hotspot cells share service load better for a macro cell.

### BRIEF DESCRIPTION OF DRAWINGS

To illustrate the technical solutions in the embodiments of the present invention more clearly, the accompanying drawings required for describing the embodiments or the prior art are briefly described in the following. Apparently, the accompanying diagrams in the following description merely show some embodiments of the present invention, and persons of ordinary skill in the art may further derive other drawings from these accompanying diagrams without creative efforts.
FIG. 1 is a flowchart of an interference control method according to an embodiment of the present invention;
FIG. 2 is a flowchart of an interference control method according to another embodiment of the present invention;
FIG. 3 is a flowchart of an interference control method according to another embodiment of the present invention;
FIG. 4 is a flowchart of an interference control method according to another embodiment of the present invention;
FIG. 5 is a schematic structural diagram of a user equipment according to an embodiment of the present invention;
FIG. 6 is a schematic structural diagram of a user equipment according to a further embodiment of the present invention;
FIG. 7 is a schematic structural diagram of a base station according to an embodiment of the present invention;
FIG. 8 is a schematic structural diagram of a user equipment according to another embodiment of the present invention;
FIG. 9 is a schematic structural diagram of a user equipment according to another embodiment of the present invention;
FIG. 10 is a schematic structural diagram of a base station according to another embodiment of the present invention;
FIG. 11 is a schematic structural diagram of a base station according to a further embodiment of the present invention;
FIG. 12 is a schematic structural diagram of a base station according to a further embodiment of the present invention; and
FIG. 13 is a schematic structural diagram of a base station according to another embodiment of the present invention.

### DESCRIPTION OF EMBODIMENTS

The following clearly and completely describes the technical solutions in the embodiments of the present invention with reference to the accompanying drawings in the embodiments of the present invention.

The technical solutions of the present invention can be applied in various communication systems, for example, a GSM, a code division multiple access (CDMA, Code Division Multiple Access) system, wideband code division multiple access (WCDMA, Wideband Code Division Multiple Access Wireless), a general packet radio service (GPRS, General Packet Radio Service), long term evolution (LTE, Long Term Evolution), and so on.

A user equipment (UE, User Equipment) may also be called as a mobile terminal (Mobile Terminal), a mobile user equipment, and so on, and may communicate with one or more core networks through a radio access network (for example, RAN, Radio Access Network). The user equipment may be a mobile terminal such as a mobile phone (or called a "cellular" phone) and a computer having a mobile terminal, for example, may be a portable, pocket-sized, handheld, computer built-in, or vehicle-mounted mobile apparatus, which exchanges language and/or data with the radio access network.

A base station may be a base station (BTS, Base Transceiver Station) in the GSM or CDMA, may also be a base station (NodeB) in the WCDMA, or may also be an evolved base station (cNB or c-NodeB, evolutional Node B) in the LTE, which is not limited in the present invention; however, for the convenience of description, an eNB is taken as an example for illustration in the following embodiments.

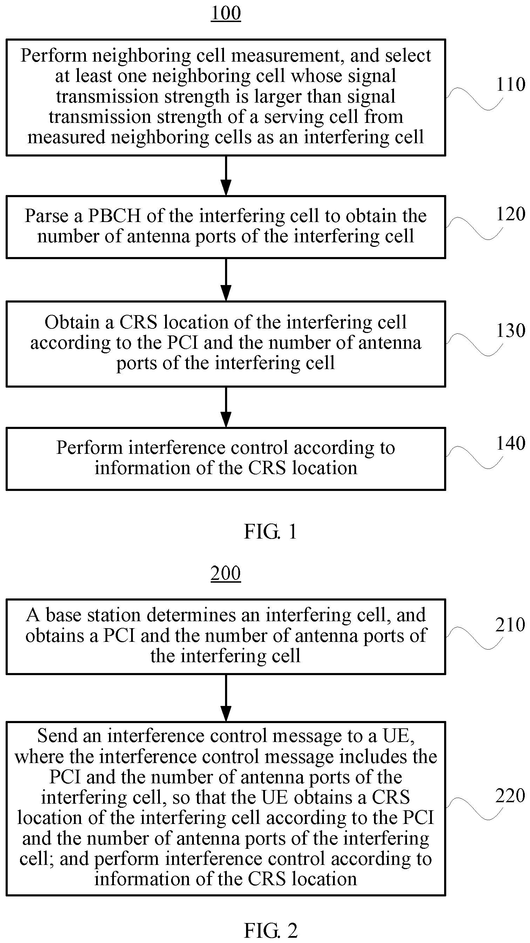

FIG. 1 is a flowchart of an interference control method 100 according to an embodiment of the present invention. As shown in FIG. 1, the interference control method 100 includes:
110: Perform neighboring cell measurement, and select at least one neighboring cell whose signal transmission strength is larger than signal transmission strength of a serving cell from measured neighboring cells as an interfering cell. According to the embodiment of the present invention, the signal transmission strength is, for example, reference signal received power (Reference Signal Receiving Power, RSRP for short) and/or reference signal received quality (Reference Signal Received Quality, RSRQ for short).
120: Parse a physical broadcast channel (Physical Broadcasting Channel, PBCH for short) of the interfering cell to obtain the number of antenna ports of the interfering cell.
130: Obtain a cell reference signaling (Cell Reference Signaling, CRS for short) location of the interfering cell according to a physical cell identifier (Physical Cell Indicator, PCI for short) and the number of antenna ports of the interfering cell.
140: Perform interference control according to information of the CRS location, for example, subtract a signal received from the interfering cell from a signal obtained at the CRS location, or discard a signal obtained at the CRS location.

According to the embodiment of the present invention, a UE may perform measurement on a radio signal of the serving cell and monitors the quality of a radio resource signal of the serving cell. For example, the UE may obtain a signal to interference plus noise ratio (Signal to Interference plus Noise Ratio, SINR for short) value through channel quality indictor (Channel Quality Indictor, CQI for short) measurement, or the UE may obtain an RSRQ value through radio resource management (Radio Resources Management, RRM for short) measurement. The UE may compare the SINR value or RSRQ value with a threshold Thic sent by a serving base station to the UE. If the SINR or RSRQ is smaller than the threshold Thic, it indicates that the UE is interfered with by a neighboring cell, to result in the deterioration of signal quality, and interference control needs to be implemented. If the SINR or RSRQ is larger than the threshold Thic, it indicates that the UE is not severely interfered with by a neighboring cell, and the interference control may not be performed.

According to the embodiment of the present invention, when the neighboring cell measurement is performed in step 110, a neighboring cell from the measured neighboring cells may be selected as an interfering cell, where a difference between the RSRP/RSRQ of the neighboring cell and the RSRP/RSRQ of the serving cell is equal to or exceeds a threshold Thag (for example, 6 dB). Here, the interfering cell represents a neighboring cell having strong interference to a signal of a UE in the serving cell. One or more interfering cells may be selected. For example, according to a sequence of RSRP/RSRQ of neighboring cells in a descending order, several neighboring cells are selected as interfering cells, where a difference between RSRP/RSRQ of each of the neighboring cells and the RSRP/RSRQ of the serving cell exceeds the Thag.

According to the embodiment of the present invention, the cell reference signaling CRS location of the interfering cell is obtained according to the physical cell identifier PCI and the number of antenna ports of the interfering cell in step 130. The neighboring cell needs to be synchronized, so as to obtain a PCI of the neighboring cell, so that the PCI of the interfering cell is also obtained at the same time. After the CRS location of the interfering cell is obtained, interference elimination processing may be performed on a signal received from the interfering cell in step 140.

According to the embodiment of the present invention, in step 140, when the UE receives data or signaling on a radio resource at the CRS location of the interfering cell, the UE implements interference coordination. For example, the UE obtains, by parsing, a signal sent from the interfering cell and received at the CRS location, and excludes the signal from all signals (including a signal sent from the serving cell and signals from all neighboring cells) received at the CRS location, or the UE may discard all signals received at the CRS location when interference from the interfering cell is very strong.

In the embodiment of the present invention, identifying the interfering cell, that is, a neighboring cell with strong interference, is mainly completed by a UE side, and in an exemplary embodiment, a base station may send the thresholds Thag and Thic to the UE through a dedicated message or other notification signaling in advance for the UE to perform interference coordination. Specifically, a system broadcast message and/or RRC dedicated signaling or MAC (Medium Access Control, medium access control) control signaling, or PDCCH (Physical Downlink Control Channel control signaling) may be used.

According to other embodiments of the present invention, identifying an interfering cell in interference coordination may also be mainly completed by a base station side.

FIG. 2 is a flowchart of an interference control method 200 according to another embodiment of the present invention, and in this embodiment, a base station side first identifies an interfering cell, and then instructs a UE to perform interference coordination. As shown in FIG. 2, the interference control method 200 includes:
210: A base station determines an interfering cell, and obtains a PCI and the number of antenna ports of the interfering cell.

According to the embodiment of the present invention, the base station may determine the interfering cell in many manners. A manner for determining the interfering cell is: the base station receives a measurement report sent by a UE, where the measurement report includes an RSRP value of a serving cell and an RSRP value of a neighboring cell, and the base station determines at least one neighboring cell whose RSRP value is larger than the RSRP value of the serving cell as the interfering cell. As described above, the base station may also determine the interfering cell through an RSRQ value. Similar to the foregoing embodiment, the interfering cell may be also determined through RSRQ values of the serving cell and the neighboring cell in the measurement report sent by the UE.

Another manner for determining the interfering cell is: the base station determines at least one invading neighboring cell as the interfering cell through an invading and victim relationship (a cell subjected to strong downlink interference is a victim cell, and a cell interfering with another cell is an invading cell) between the serving cell and another neighboring cell that is configured by an operation, administration, and maintenance (Operation, Administration and Maintenance, OAM for short) entity.

Another manner for determining the interfering cell is: when relative narrowband TX power (Relative Narrowband TX Power, RNTP for short) obtained from a received load indication (Load Indication) exceeds a threshold, the base station learns that, that downlink interference of the neighboring cell to a UE of the serving cell exists, so as to determine the interfering cell.

220: Send an interference control message to a UE, where the interference control message includes the PCI and the number of antenna ports of the interfering cell, so that the UE obtains a CRS location of the interfering cell according to the PCI and the number of antenna ports of the interfering cell; and perform interference control according to information of the CRS location, for example, subtract a signal received from the interfering cell from a signal obtained at the CRS location, or discard a signal obtained at the CRS location.

According to the embodiment of the present invention, in step 210, when the interfering cell is determined through the RSRP/RSRQ value or RNTP value, the base station may sequence RSRP/RSRQ or RNTP values of neighboring cells in a descending order, so as to determine one or more interfering cells. Same as the interference control method 100 in the foregoing embodiment, the base station may select a neighboring cell from the measured neighboring cells as the interfering cell, where a difference between an RSRP/RSRQ or RNTP value of the neighboring cell and the RSRP/RSRQ or RNTP value of the serving cell is equal to or exceeds a threshold Thag (for example, 6 dB).

After identifying the interfering cell, the base station may notify the UE of the interfering cell in step 220, so that the UE performs the interference coordination. The specific interference coordination mechanism is similar to step 140 in the interference control method 100 described above, that is, when the UE receives data or signaling on a radio resource at the CRS location of the interfering cell, the UE implements the interference coordination. For example, the UE obtains, by parsing, a signal sent from the interfering cell and received at the CRS location, and excludes the signal from all signals (including a signal sent from the serving cell and signals from all neighboring cells) received at the CRS location, or the UE may discard all signals received at the CRS location when interference from the interfering cell is very strong.

In this embodiment, if the interfering cell is determined through the RSRP/RSRQ value, from a UE side, work mainly completed by the UE is:
The UE sends the measurement report to the base station, where the measurement report includes the RSRP/RSRQ value of the serving cell and the RSRP/RSRQ value of the neighboring cell, so that the base station determines at least one neighboring cell whose RSRP/RSRQ value is larger than the RSRP/RSRQ value of the serving cell as the interfering cell, and the base station obtains the PCI and the number of antenna ports of the interfering cell.

The UE receives the interference control message sent by the base station, where the interference control message includes the PCI and the number of antenna ports of the interfering cell.

The UE obtains the CRS location of the interfering cell according to the PCI and the number of antenna ports of the interfering cell.

The UE performs the interference control according to information of the CRS location, for example, subtracts a signal received from the interfering cell from a signal obtained at the CRS location, or discards a signal obtained at the CRS location.

According to other embodiments of the present invention, the interference coordination may be implemented by the base station in cooperation with the UE.

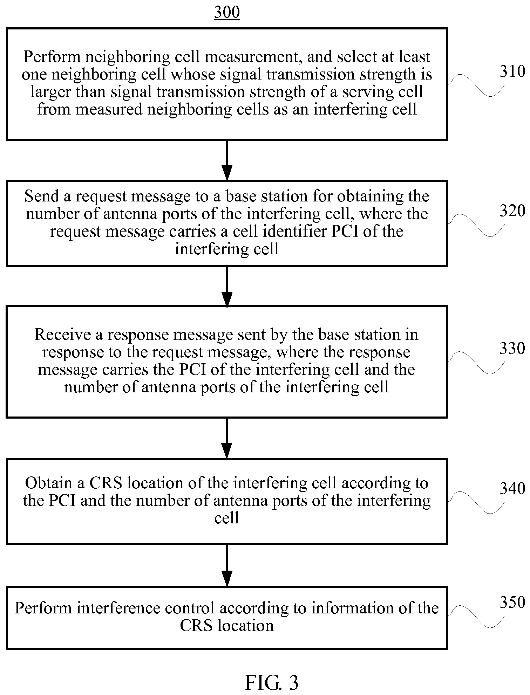

FIG. 3 is a flowchart of an interference control method 300 according to another embodiment of the present invention, and in this embodiment, a UE side first determines an interfering cell, then, a base station side obtains a PCI and the number of antenna ports of the interfering cell, and then the UE side performs interference coordination. As shown in FIG. 3, the interference control method 300 includes:
310: Perform neighboring cell measurement, and select at least one neighboring cell whose signal transmission strength is larger than signal transmission strength of a serving cell from measured neighboring cells as an interfering cell.
320: Send a request message to a base station for obtaining the number of antenna ports of the interfering cell, where the request message carries a PCI of the interfering cell.
330: Receive a response message of the interfering cell sent by the base station in response to the request message, where the response message carries the PCI of the interfering cell and the number of antenna ports of the interfering cell.
340: Obtain a CRS location of the interfering cell according to the PCI of the interfering cell and the number of antenna ports of the interfering cell.
350: Perform interference control according to information of the CRS location, for example, subtract a signal received from the interfering cell from a signal obtained at the CRS location, or discard a signal obtained at the CRS location.

Same as the embodiment shown in FIG. 1, the signal transmission strength may be represented by an RSRP or RSRQ value.

Same as the embodiment shown in FIG. 1, according to the embodiment of the present invention shown in FIG. 3, a UE may perform measurement on a radio signal of the serving cell and monitors the quality of a radio resource signal of the serving cell. For example, the UE may obtain an SINR value through CQI measurement, or the UE may obtain the RSRQ value through RRM measurement. The UE may compare the SINR value or RSRQ value with a threshold Thic sent by a serving base station to the UE. If the SINR or RSRQ is smaller than the threshold Thic, it indicates that the UE is interfered with by a neighboring cell, to result in the deterioration of signal quality, and interference control needs to be implemented. If the SINR or RSRQ is larger than the threshold Thic, it indicates that the UE is not severely interfered with by a neighboring cell, and the interference control may not be performed.

According to the embodiment of the present invention, when the neighboring cell measurement is performed in step 310, a neighboring cell may be selected from the measured neighboring cells as the interfering cell, where a difference between the RSRP/RSRQ of the neighboring cell and the RSRP/RSRQ of the serving cell is equal to or exceeds a threshold Thag (for example, 6 dB). Here, the interfering cell represents a neighboring cell having strong interference to a signal of a UE in the serving cell. One or more interfering cells may be selected. For example, according to a sequence of RSRP/RSRQ of neighboring cells in a descending order, several neighboring cells are selected as interfering cells, where a difference between RSRP/RSRQ of each of the neighboring cells and the RSRP/RSRQ of the serving cell exceeds the Thag.

Difference from the embodiment shown in FIG. 1, according to the embodiment shown in FIG. 3, in step 320, the UE sends the request message to the base station according to the PCI of the interfering cell, to obtain the number of antenna ports of the interfering cell. Then, in step 330, the UE receives the response message sent by the base station in response to the request message, where the number of antenna ports of the interfering cell is sent to the UE. After obtaining the CRS location of the interfering cell, the UE may obtain the CRS location of the interfering cell according to the PCI and the number of antenna ports of the interfering cell in step 340. Then, in step 350, interference elimination processing is performed on a signal received from the interfering cell.

According to the embodiment of the present invention, in step 350, when the UE receives data or signaling on a radio resource at the CRS location of the interfering cell, the UE implements the interference coordination. For example, the UE obtains, by parsing, a signal sent from the interfering cell and received at the CRS location, and excludes the signal from all signals (including a signal sent from the serving cell and signals from all neighboring cells) received at the CRS location, or the UE may discard all signals received at the CRS location when interference from the interfering cell is very strong.

In the embodiment of the present invention shown in FIG. 3, identifying the interfering cell, that is, a neighboring cell with strong interference, is completed by the UE side in cooperation with the base station side, and in an exemplary embodiment, the base station may send the thresholds Thag and Thic to the UE through a dedicated message or other notification signaling in advance for the UE to perform the interference coordination. Specifically, a system broadcast message and/or RRC dedicated signaling or MAC (Medium Access Control, medium access control) control signaling, or PDCCH (Physical Downlink Control Channel control signaling) may be used.

The UE is interfered with by a signal from the neighboring cell, which is mainly caused by a conflict between the CRS location of the serving cell and a CRS location of the neighboring cell. In a situation where channel status information reference signaling (Channel Status Information Reference Signaling, CSI-RS for short) exists, if CSI-RS configuration information of the serving cell conflicts with CSI-RS configuration information of the neighboring cell, the UE in the serving cell may be interfered with. Therefore, according to another embodiment of the present invention, that coordination is performed between a base station eNB1 in the serving cell and a base station eNB2 in the neighboring cell may be taken into consideration, so as to avoid a conflict between CRS/CSI-RS of the eNB1 and CRS/CSI-RS of eNB2, and therefore, interference to the UE in the serving cell is reduced and even eliminated.

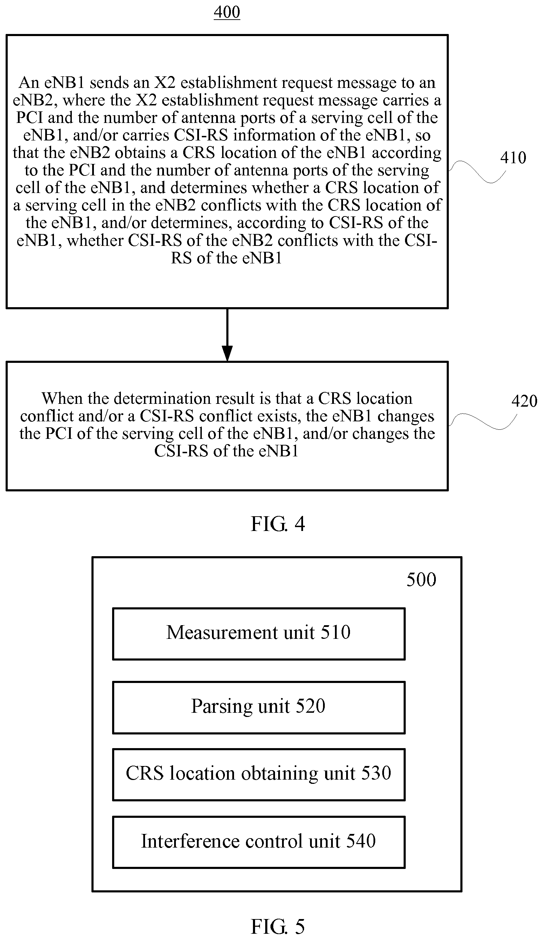

FIG. 4 is a flowchart of an interference control method 400 according to another embodiment of the present invention. As shown in FIG. 4, the interference control method 400 includes:

410: A first base station eNB1 sends an X2 establishment request message to a second base station eNB2, where the X2 establishment request message carries a PCI and the number of antenna ports of a serving cell of the first base station eNB1, and/or carries CSI-RS information of the first base station,
so that the second base station eNB2 obtains a CRS location of the first base station according to the PCI and the number of antenna ports of the serving cell of the first base station eNB1, and determines whether a CRS location of a serving cell in the second base station eNB2 conflicts with the CRS location of the first base station eNB1, and/or determines, according to CSI-RS of the first base station eNB1, whether CSI-RS of the second base station eNB2 conflicts with CSI-RS of the first base station eNB1.

420: When the determination result is that a CRS location conflict and/or a CSI-RS conflict exists, the first base station eNB1 changes the PCI of the serving cell of the first base station eNB1, and/or changes the CSI-RS of the first base station eNB1.

The CRS location of the eNB1 may change if the eNB1 changes the PCI of the serving cell of the eNB1; therefore, a conflict between the CRS location of the eNB1 and the CRS location of the eNB2 no longer exist.

According to the embodiment of the present invention, changing the PCI and/or CSI-RS configuration information of the eNB1 by the eNB1 may be implemented by negotiation between the eNB1 and the eNB2. The specific implementation process is:
The first base station eNB1 receives an X2 establishment response message sent by the second base station eNB2, where the X2 establishment response message carries request information for requesting the first base station eNB1 to change the PCI of the serving cell of the first base station eNB1 and/or change the CSI-RS of the first base station.

The first base station eNB1 changes the PCI of the serving cell of the first base station eNB1 and/or changes the CSI-RS of the first base station according to the request information for changing the PCI of the serving cell and/or changing the CSI-RS of the first base station eNB1.

The first base station eNB1 sends a configuration update message to the second base station eNB2, where the configuration update message carries the changed PCI of the serving cell of the first base station eNB1 and/or the changed CSI-RS of the first base station eNB2.

According to another embodiment of the present invention, the eNB may also offset a location of the CRS and/or CSI-RS of the eNB1 according to a request of the eNB2. The specific implementation process is:

The first base station eNB1 receives a time offset message sent by the second base station eNB2, where the time offset message carries a time symbol offset value or a subframe offset value.

The first base station eNB1 offsets the CRS of the first base station and/or offsets the CSI-RS of the first base station eNB1 according to the time symbol offset value in the time symbol offset message.

According to another embodiment of the present invention, the eNB2 may also change the PCI and/or CSI-RS configuration of a serving cell of the eNB2, to avoid a conflict with the CRS and/or CSI-RS of the eNB1. Observed from an eNB2 side, work mainly completed by the eNB2 is:

The second base station eNB2 receives the X2 establishment request message sent by the first base station eNB1, where the X2 establishment request message carries the PCI and the number of antenna ports of the serving cell of the first base station eNB1, and/or carries the CSI-RS information of the first base station eNB1.

The second base station eNB2 obtains the CRS location of the first base station eNB1 according to the PCI and the number of antenna ports of the serving cell of the first base station eNB1, and determines whether the CRS location of the serving cell in the second base station eNB2 conflicts with the CRS location of the first base station eNB1, and/or determines, according to the CSI-RS of the first base station eNB1, whether the CSI-RS of the second base station eNB2 conflicts with the CSI-RS of the first base station eNB1.

When the determination result is that a CRS location conflict and/or a CSI-RS conflict exists, the second base station eNB2 changes the PCI of the serving cell of the second base station eNB2, and/or changes the CSI-RS of the second base station.

According to another embodiment of the present invention, when a CRS location conflict and/or a CSI-RS location conflict exists, the second base station eNB2 may also offset the CRS and/or CSI-RS configuration of the serving cell of the second base station eNB2, where the offset is a time symbol offset or subframe offset, and notifies the first base station eNB1, so as to avoid a CRS conflict /a CSI-RS conflict.

According to the embodiment of the present invention, interference of a signal of a neighboring cell to a user equipment in a serving cell is reduced, the communication quality of the user equipment in the serving cell is improved, and some hotspot cells share service load better for a macro cell.

According to embodiments of the present invention, a user equipment and a base station for implementing the interference control method of the embodiment of the present invention are further provided. It should be noted that, features in the method of the embodiment of the present invention are also applicable to the user equipment and the base station in the embodiments of the present invention.

FIG. 5 is a schematic structural diagram of a user equipment 500 according to an embodiment of the present invention. As shown in FIG. 5, the user equipment 500 includes:
a measurement unit 510, configured to perform neighboring cell measurement, and select at least one neighboring cell whose signal transmission strength is larger than signal transmission strength of a serving cell from measured neighboring cells as an interfering cell;
a parsing unit 520, configured to parse a physical broadcast channel PBCH of the interfering cell to obtain the number of antenna ports of the interfering cell;
a CRS location obtaining unit 530, configured to obtain a cell reference signaling CRS location of the interfering cell according to a physical cell identifier PCI and the number of antenna ports of the interfering cell; and
an interference control unit 540, configured to perform interference control according to information of the CRS location, for example, configured to subtract a signal received from the interfering cell from a signal obtained at the CRS location, or discard a signal obtained at the CRS location.

According to the embodiment of the present invention, the signal transmission strength may be represented by an RSRP or RSRQ value.

According to the embodiment of the present invention, before performing the neighboring cell measurement, the measurement unit 510 is further configured to perform signal quality measurement of a serving cell, so as to obtain a measurement value representing the signal quality of the serving cell, and perform the neighboring cell measurement when the measurement value is decreased to a value below a first threshold.

According to the embodiment of the present invention, the signal quality measurement of the serving cell performed by the measurement unit 510 includes channel quality index CQI measurement, and the measurement value is a signal to interference plus noise ratio SINR value, or
the signal quality measurement of the serving cell performed by the measurement unit 510 includes radio resource management RRM measurement, and the measurement value is a reference signal received quality RSRQ value.

According to the embodiment of the present invention, during the neighboring cell measurement, the measurement unit 510 selects at least one neighboring cell from the measured neighboring cells as an interfering cell, where a difference between the RSRP of the neighboring cell and the RSRP of the serving cell is a second threshold, that is, Thag (for example, 6 dB).

According to the embodiment of the present invention, during the neighboring cell measurement, the measurement unit 510 selects at least one neighboring cell from the measured neighboring cells as an interfering cell, where a difference between the RSRQ of the neighboring cell and the RSRQ of the serving cell is the second threshold, that is, the Thag (for example, 6 dB).

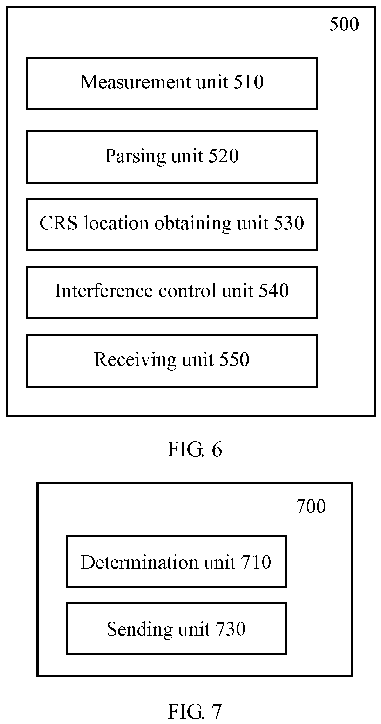

According to the embodiment of the present invention, as shown in FIG. 6, the user equipment 500 further includes a receiving unit 550, configured to receive an interference control message sent by a base station, where the interference control message includes the first threshold and the second threshold.

FIG. 7 is a schematic structural diagram of a base station 700 according to an embodiment of the present invention. As shown in FIG. 6, the base station 600 includes:
a determination unit 710, configured to determine an interfering cell, and obtain a PCI and the number of antenna ports of the interfering cell; and
a sending unit 720, configured to send an interference control message to a UE, where the interference control message includes the PCI and the number of antenna ports of the interfering cell, so that the UE obtains a CRS location of the interfering cell according to the PCI and the number of antenna ports of the interfering cell; and perform interference control according to information of the CRS location, for example, subtract a signal received from the interfering cell from a signal obtained at the CRS location, or discard a signal obtained at the CRS location.

According to the embodiment of the present invention, the determination unit 710 is configured to receive a measurement report sent by the user equipment UE, where the measurement report includes an RSRP value of a serving cell and an RSRP value of a neighboring cell, and configured to determine at least one neighboring cell whose RSRP value is larger than the RSRP value of the serving cell as an interfering cell, and obtain the PCI and the number of antenna ports of the interfering cell.

According to the embodiment of the present invention, the determination unit 710 is configured to receive a measurement report sent by the user equipment UE, where the measurement report includes an RSRQ value of a serving cell and an RSRQ value of a neighboring cell, and configured to determine at least one neighboring cell whose RSRQ value is larger than the RSRQ value of the serving cell as an interfering cell, and obtain the PCI and the number of antenna ports of the interfering cell.

According to the embodiment of the present invention, the determination unit 710 is configured to determine at least one invading neighboring cell as an interfering cell through an invading and victim relationship between a serving cell and another neighboring cell configured by OAM.

According to the embodiment of the present invention, the determination unit 710 is configured to learn, through that RNTP obtained from a received load indication exceeds a threshold, that downlink interference of the neighboring cell to a UE of the serving cell exists, so as to determine the interfering cell.

According to the embodiment of the present invention, the determination unit 720 is configured to determine a neighboring cell as the interfering cell, where a difference between an RSRP value of the neighboring cell and the RSRP value of the serving cell is a second threshold, that is, Thag (for example, 6 dB).

According to the embodiment of the present invention, the determination unit 720 may also be configured to determine a neighboring cell as the interfering cell, where a difference between an RSRQ value of the neighboring cell and the RSRQ value of the serving cell is the second threshold, that is, the Thag (for example, 6 dB).

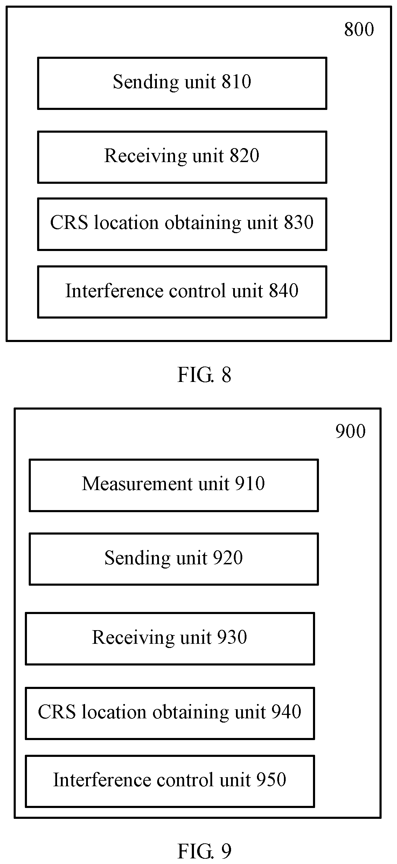

FIG. 8 is a schematic structural diagram of another user equipment 800 according to an embodiment of the present invention. As shown in FIG. 8, the user equipment 800 includes:
a sending unit 810, configured to send a measurement report to a base station, where the measurement report includes an RSRP value of a serving cell and an RSRP value of a neighboring cell, so that the base station determines at least one neighboring cell whose RSRP value is larger than the RSRP value of the serving cell as an interfering cell, and the base station obtains a PCI and the number of antenna ports of the interfering cell;
a receiving unit 820, configured to receive an interference control message sent by the base station, where the interference control message includes the PCI and the number of antenna ports of the interfering cell;
a CRS location obtaining unit 830, configured to obtain a CRS location of the interfering cell according to the PCI and the number of antenna ports of the interfering cell; and
an interference control unit 840, configured to perform interference control according to information of the CRS location, for example, configured to subtract a signal received from the interfering cell from a signal obtained at the CRS location, or discard a signal obtained at the CRS location.

According to the embodiment of the present invention, the measurement report sent by the sending unit 810 to the base station may also include an RSRQ value of the serving cell and an RSRQ value of the neighboring cell, so that the base station determines at least one neighboring cell whose RSRQ value is larger than the RSRQ value of the serving cell as the interfering cell, and the base station obtains the PCI and the number of antenna ports of the interfering cell.

According to the embodiment of the present invention, the sending unit 810 is configured to send the measurement report to the base station, so that the base station determines a neighboring cell as the interfering cell, where a difference between an RSRP value of the neighboring cell and an RSRP value of the serving cell is a second threshold, that is, Thag (for example, 6 dB).

According to the embodiment of the present invention, the sending unit 810 is configured to send the measurement report to the base station, so that the base station determines a neighboring cell as the interfering cell, where a difference between an RSRQ value of the neighboring cell and the RSRQ value of the serving cell is the second threshold, that is, the Thag (for example, 6 dB).

FIG. 9 is a schematic structural diagram of another user equipment according to an embodiment of the present invention. As shown in FIG. 9, the user equipment 900 includes:
a measurement unit 910, configured to perform neighboring cell measurement, and select at least one neighboring cell whose signal transmission strength is larger than signal transmission strength of a serving cell from measured neighboring cells as an interfering cell;
a sending unit 920, configured to send a request message to a base station for obtaining the number of antenna ports of the interfering cell, where the request message carries a PCI of the interfering cell;
a receiving unit 930, configured to receive a response message sent by the base station in response to the request message, where the response message carries the PCI of the interfering cell and the number of antenna ports of the interfering cell;
a CRS location obtaining unit 940, configured to obtain a cell reference signaling CRS location of the interfering cell according to the PCI of the interfering cell and the number of antenna ports of the interfering cell; and
an interference control unit 950, configured to perform interference control according to information of the CRS location, for example, subtract a signal received from the interfering cell from a signal obtained at the CRS location, or discard a signal obtained at the CRS location.

According to the embodiment of the present invention, signal received strength may be represented by RSRP or RSRQ.

Similar to the user equipment 500 shown in FIG. 5, according to the embodiment of the present invention, before performing the neighboring cell measurement, the measurement unit 910 is further configured to perform signal quality measurement of a serving cell, so as to obtain a measurement value representing the signal quality of the serving cell, and perform the neighboring cell measurement when the measurement value is decreased to a value below a first threshold.

Similar to the user equipment 500 shown in FIG. 5, according to the embodiment of the present invention, the signal quality measurement of the serving cell performed by the measurement unit 910 includes channel quality index CQI measurement, and the measurement value is a signal to interference plus noise ratio SINR value, or
the signal quality measurement of the serving cell performed by the measurement unit includes radio resource management RRM measurement, and the measurement value is a reference signal received quality RSRQ value.

Similar to the user equipment 500 shown in FIG. 5, according to the embodiment of the present invention, during the neighboring cell measurement, the measurement unit 910 selects at least one neighboring cell from the measured neighboring cells as the interfering cell, where a difference between the RSRP of the neighboring cell and the RSRP of the serving cell is a second threshold.

Similar to the user equipment 500 shown in FIG. 5, according to the embodiment of the present invention, during the neighboring cell measurement, the measurement unit 910 selects at least one neighboring cell from the measured neighboring cells as the interfering cell, where a difference between the RSRQ of the neighboring cell and the RSRQ of the serving cell is a second threshold.

According to the embodiment of the present invention, the receiving unit 930 is further configured to receive an interference control message sent by the base station, where the interference control message includes the first threshold and the second threshold.

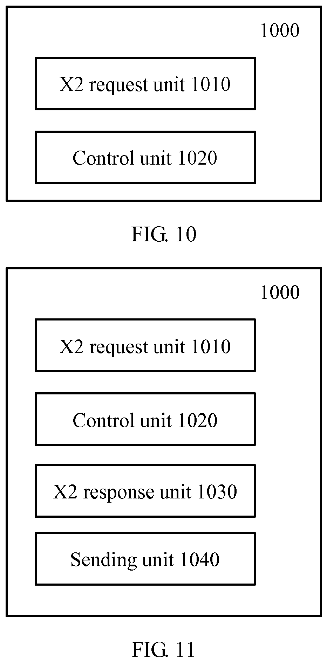

FIG. 10 is a schematic structural diagram of another base station 1000 according to an embodiment of the present invention. The base station 1000 may be used as the eNB1 for implementing the method in the foregoing embodiment of the present invention. As shown in FIG. 10, the base station 1000 includes:
an X2 request unit 1010, configured to send an X2 establishment request message to a second base station, where the X2 establishment request message carries a PCI and the number of antenna ports of a serving cell of the base station 1000, and/or carries CSI-RS information of the base station 1000,
so that the second base station obtains a CRS location of the base station 1000 according to the PCI and the number of antenna ports of the serving cell of the base station 1000, and determines whether a CRS location of a serving cell in the second base station conflicts with the CRS location of the base station 800, and/or determines, according to CSI-RS of the base station 800, whether CSI-RS of the second base station conflicts with the CSI-RS of the base station 1000; and
a control unit 1020, configured to: when the determination result is that a CRS location conflict and/or a CSI-RS conflict exists, change the PCI of the serving cell of the base station 1000, and/or change the CSI-RS of the base station.

According to the embodiment of the present invention, as shown in FIG. 11, the base station 1000 may further include:
an X2 response unit 1030, configured to receive an X2 establishment response message sent by the second base station, where the X2 establishment response message carries request information for requesting the base station 800 to change the PCI of the serving cell of the base station 800 and/or change the CSI-RS of the base station 1000; where
the control unit 1020 changes the PCI of the serving cell of the base station 1000 and/or changes the CSI-RS of the base station 800, according to the request information for changing the PCI of the serving cell and/or changing the CSI-RS of the base station 1000; and
a sending unit 1040, configured to send a configuration update message to the second base station, where the configuration update message carries the changed PCI of the serving cell of the base station 800 and/or the changed CSI-RS of the base station 1000.

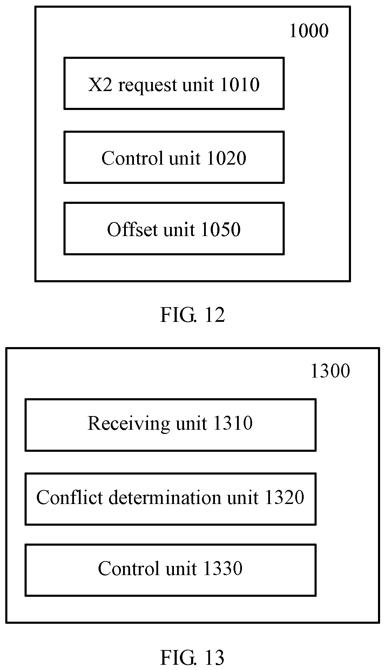

According to another embodiment of the present invention, as shown in FIG. 12, different from the embodiment shown in FIG. 11, the base station 1000 may include:
an offset unit 1050, configured to receive a time symbol offset message sent by the second base station, where the time symbol offset message carries a time symbol offset value, where
the control unit 1020 offsets the PCI of the serving cell of the base station 1000 and/or offsets the CSI-RS of the base station 800, according to the time symbol offset value in the time symbol offset message.

FIG. 13 is a schematic structural diagram of another base station 1300 according to an embodiment of the present invention. The base station 1300 may be used as the eNB2 for implementing the method in the foregoing embodiment of the present invention. As shown in FIG. 11, the base station 1300 includes:
a receiving unit 1310, configured to receive an X2 establishment request message sent by a first base station, where the X2 establishment request message carries a PCI and the number of antenna ports of a serving cell of the first base station, and/or carries CSI-RS information of the first base station;
a conflict determination unit 1320, configured to obtain a CRS location of the first base station according to the PCI and the number of antenna ports of the serving cell of the first base station, and determine whether a CRS location of a serving cell in the base station 1300 conflicts with the CRS location of the first base station, and/or determine, according to CSI-RS of the first base station, whether CSI-RS of the base station 1300 conflicts with the CSI-RS of the first base station; and
a control unit 1330, configured to: when the determination result is that a CRS location conflict and/or a CSI-RS conflict exists, change the PCI of the serving cell of the base station 1300, and/or change the CSI-RS of the base station.

Persons of ordinary skill in the art may appreciate that, in combination with the examples described in the embodiments disclosed herein, units and algorithm steps can be implemented by electronic hardware, or a combination of computer software and electronic hardware. Whether the functions are executed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, reference may be made to the corresponding processes in the method embodiments for the specific working processes of the foregoing systems, apparatuses, and units, and details are not elaborated herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanic, or other forms.

The units described as separate parts may be or may not be physically separate, and parts displayed as units may be or may not be physical units, which may be located in one position, or may be distributed on multiple network elements. A part or all of the units may be selected according to actual needs to achieve the objectives of the solutions of the embodiments.

In addition, various functional units according to each embodiment of the present invention may be integrated in one processing unit or may physically exist as separate units, or two or more units may also be integrated in one unit.

If the function is implemented in a form of a software functional unit and sold and used as an independent product, the function may be stored in a computer readable storage medium. Based on such understanding, the technical solutions of the present invention essentially, or the part contributing to the prior art, or part of the technical solutions may be implemented in the form of a software product. The computer software product is stored in a storage medium, and includes several instructions for instructing a computer device (which may be a personal computer, a server, or a network device) to perform all or a part of the steps of the method described in the embodiments of the present invention. The storage medium includes any medium capable of storing a program code, such as a USB flash drive, a mobile hard disk, a read-only memory (ROM, Read-only Memory), a random access memory (RAM, Random Access Memory), a magnetic disk, or an optical disk.

Further embodiments of the present invention are provided in the following. It should be noted that the numbering used in the following section does not necessarily need to comply with the numbering used in the previous sections.
Embodiment 1. An interference control method, comprising:
   performing neighboring cell measurement, and selecting at least one neighboring cell whose signal transmission strength is larger than signal transmission strength of a serving cell from measured neighboring cells as an interfering cell;
   parsing a physical broadcast channel PBCH of the interfering cell to obtain the number of antenna ports of the interfering cell;
   obtaining a cell reference signaling CRS location of the interfering cell according to a physical cell identifier PCI and the number of antenna ports of the interfering cell; and
   performing interference control according to information of the CRS location.
Embodiment 2. The method according to embodiment 1,
   before the performing neighboring cell measurement, further comprising:
   performing signal quality measurement of the serving cell, so as to obtain a measurement value representing signal quality of the serving cell, and performing the neighboring cell measurement when the measurement value is decreased to a value below a first threshold.
Embodiment 3. The method according to embodiment 2, wherein
   the signal quality measurement of the serving cell comprises channel quality index CQI measurement, and the measurement value is a signal to interference plus noise ratio SINR value, or
   the signal quality measurement of the serving cell comprises radio resource management RRM measurement, and the measurement value is a reference signal received quality RSRQ value.
Embodiment 4. The method according to embodiment 2, wherein
   the signal transmission strength is represented by a reference signal received power RSRP or an RSRQ value.
Embodiment 5. The method according to embodiment 4, wherein
   during the neighboring cell measurement, at least one neighboring cell is selected from the measured neighboring cells as the interfering cell, wherein a difference between RSRP of the neighboring cell and RSRP of the serving cell is a second threshold.
Embodiment 6. The method according to embodiment 5, further comprising:
   receiving an interference control message sent by a base station, wherein the interference control message comprises the first threshold and the second threshold.
Embodiment 7. The method according to embodiment 1, wherein:
   the interference control method comprises subtracting a signal received from the interfering cell from an obtained signal, or discard a signal obtained at the CRS location.
Embodiment 8. An interference control method, comprising:
   determining an interfering cell, and obtaining a PCI and the number of antenna ports of the interfering cell;
   sending an interference control message to a UE, wherein the interference control message comprises the PCI and the number of antenna ports of the interfering cell,
   so that the UE obtains a CRS location of the interfering cell according to the PCI and the number of antenna ports of the interfering cell; and
   performing interference control according to information of the CRS location.
Embodiment 9. The method according to embodiment 8, wherein
   the determining an interfering cell comprises:
   receiving a measurement report sent by the user equipment UE, wherein the measurement report comprises an RSRP value of a serving cell and an RSRP value of a neighboring cell, and determining at least one neighboring cell whose RSRP value is larger than the RSRP value of the serving cell as the interfering cell;
   or,
   determining at least one neighboring cell as the interfering cell through an invading and victim relationship between cells that is configured by an operation, administration, and maintenance OAM entity;
   or,
   determining, through that relative narrowband TX power RNTP obtained from a load indication exceeds a threshold, at least one neighboring cell having downlink interference to a UE of the serving cell as the interfering cell.
Embodiment 10. The method according to embodiment 9, wherein
   the determining a neighboring cell whose RSRP value is larger than the RSRP value of the serving cell as the interfering cell comprising: determining a neighboring cell as the interfering cell, wherein a difference between an RSRP value of the neighboring cell and the RSRP value of the serving cell is a second threshold.
Embodiment 11. An interference control method, comprising:
   sending a measurement report to a base station, wherein the measurement report comprises an RSRP value of a serving cell and an RSRP value of a neighboring cell, so that the base station determines at least one neighboring cell whose RSRP value is larger than the RSRP value of the serving cell as an interfering cell, and the base station obtains a PCI and the number of antenna ports of the interfering cell;
   receiving an interference control message sent by the base station, wherein the interference control message comprises the PCI and the number of antenna ports of the interfering cell;
   obtaining a CRS location of the interfering cell according to the PCI and the number of antenna ports of the interfering cell; and
   performing interference control according to information of the CRS location.
Embodiment 12. The method according to embodiment 11, wherein
   the sending a measurement report to a base station, so that the base station determines a neighboring cell whose RSRP value is larger than the RSRP value of the serving cell as an interfering cell comprises: determining a neighboring cell as the interfering cell, wherein a difference between an RSRP value of the neighboring cell and the RSRP value of the serving cell is a second threshold.
Embodiment 13. An interference control method, comprising:
   performing neighboring cell measurement, and selecting at least one neighboring cell whose signal transmission strength is larger than signal transmission strength of a serving cell from measured neighboring cells as an interfering cell;
   sending a request message to a base station for obtaining the number of antenna ports of the interfering cell, wherein the request message carries a PCI of the interfering cell;
   receiving a response message sent by the base station in response to the request message, wherein the response message carries the PCI of the interfering cell and the number of antenna ports of the interfering cell;
   obtaining a CRS location of the interfering cell according to the PCI of the interfering cell and the number of antenna ports of the interfering cell; and
   performing interference control according to information of the CRS location.
Embodiment 14. The method according to embodiment 13, wherein
   the signal transmission strength is represented by an RSRP or RSRQ value.
Embodiment 15. The method according to embodiment 13,
   before the performing neighboring cell measurement, further comprising:
   performing signal quality measurement of the serving cell, so as to obtain a measurement value representing signal quality of the serving cell, and performing the neighboring cell measurement when the measurement value is decreased to a value below a first threshold.
Embodiment 16. The method according to embodiment 15, wherein
   the signal quality measurement of the serving cell comprises channel quality index CQI measurement, and the measurement value is a signal to interference plus noise ratio SINR value, or
   the signal quality measurement of the serving cell comprises radio resource management RRM measurement, and the measurement value is a reference signal received quality RSRQ value.
Embodiment 17. The method according to embodiment 15, wherein
   during the neighboring cell measurement, at least one neighboring cell is selected from the measured neighboring cells as the interfering cell, wherein a difference between RSRP of the neighboring cell and RSRP of the serving cell is a second threshold.
Embodiment 18. The method according to embodiment 17, further comprising:
   receiving an interference control message sent by the base station, wherein the interference control message comprises the first threshold and the second threshold.
Embodiment 19. An interference control method, comprising:
   sending, by a first base station, an X2 establishment request message to a second base station, wherein the X2 establishment request message carries a PCI and the number of antenna ports of a serving cell of the first base station, and/or carries channel status information reference signaling CSI-RS configuration information of the first base station,
   so that the second base station obtains a CRS location of the first base station according to the PCI and the number of antenna ports of the serving cell of the first base station, and determines whether a CRS location of a serving cell in the second base station conflicts with the CRS location of the first base station, and/or determines, according to a CSI-RS location of the first base station, whether a CSI-RS location of the second base station conflicts with the CSI-RS location of the first base station; and
   when the determination result is that a CRS location conflict and/or a CSI-RS location conflict exists, changing, by the first base station, the PCI and/or the number of antenna ports of the serving cell of the first base station, and/or changing CSI-RS configuration of the first base station.
Embodiment 20. The method according to embodiment 19, wherein
   the changing, by the first base station, the PCI of the serving cell of the first base station, and/or CSI-RS configuration of the first base station specifically comprises:
   receiving, by the first base station, an X2 establishment response message sent by the second base station, wherein the X2 establishment response message carries request information for requesting the first base station to change the PCI of the serving cell of the first base station and/or change the CSI-RS configuration of the first base station;
   changing, by the first base station, the PCI of the serving cell of the first base station and/or changing the CSI-RS configuration of the first base station according to the request information for changing the PCI of the serving cell and/or changing the CSI-RS configuration of the first base station; and
   sending, by the first base station, a configuration update message to the second base station, wherein the configuration update message carries the changed PCI of the serving cell of the first base station and/or the changed CSI-RS configuration of the first base station.
Embodiment 21. The method according to embodiment 19, wherein
   the changing, by the first base station, the PCI of the serving cell of the first base station, and/or CSI-RS of the first base station specifically comprises:
   receiving, by the first base station, a time symbol offset message sent by the second base station, wherein the time symbol offset message carries a time symbol offset value; and
   offsetting, by the first base station, CRS of the first base station and/or offsetting the CSI-RS of the first base station according to the time symbol offset value in the time symbol offset message.
Embodiment 22. An interference control method, comprising:
   receiving, by a second base station, an X2 establishment request message sent by a first base station, wherein the X2 establishment request message carries a PCI and the number of antenna ports of a serving cell of the first base station, and/or carries CSI-RS information of the first base station;
   obtaining, by the second base station, a CRS location of the first base station according to the PCI and the number of antenna ports of the serving cell of the first base station, and determining whether a CRS location of a serving cell in the second base station conflicts with the CRS location of the first base station, and/or determining, according to CSI-RS of the first base station, whether CSI-RS of the second base station conflicts with the CSI-RS of the first base station; and
   when the determination result is that a CRS location conflict and/or a CSI-RS conflict exists, changing, by the second base station, a PCI of a serving cell of the second base station, and/or changing the CSI-RS of the second base station.
Embodiment 23. A user equipment, comprising:
   a measurement unit, configured to perform neighboring cell measurement, and select at least one neighboring cell whose signal transmission strength is larger than signal transmission strength of a serving cell from measured neighboring cells as an interfering cell;
   a parsing unit, configured to parse a physical broadcast channel PBCH of the interfering cell to obtain the number of antenna ports of the interfering cell;
   a CRS location obtaining unit, configured to obtain a cell reference signaling CRS location of the interfering cell according to a physical cell identifier PCI and the number of antenna ports of the interfering cell; and
   an interference control unit, configured to perform interference control according to information of the CRS location.
Embodiment 24. The user equipment according to embodiment 23, wherein
   the signal transmission strength is represented by an RSRP or RSRQ value.
Embodiment 25. The user equipment according to embodiment 24, wherein
   before performing the neighboring cell measurement, the measurement unit is further configured to perform signal quality measurement of the serving cell, so as to obtain a measurement value representing signal quality of the serving cell, and perform the neighboring cell measurement when the measurement value is decreased to a value below a first threshold.
Embodiment 26. The user equipment according to embodiment 25, wherein
   the signal quality measurement of the serving cell performed by the measurement unit comprises channel quality index CQI measurement, and the measurement value is a signal to interference plus noise ratio SINR value, or
   the signal quality measurement of the serving cell performed by the measurement unit comprises radio resource management RRM measurement, and the measurement value is a reference signal received quality RSRQ value.
Embodiment 27. The user equipment according to embodiment 25, wherein
   during the neighboring cell measurement, the measurement unit selects at least one neighboring cell from the measured neighboring cells as the interfering cell, wherein a difference between RSRP of the neighboring cell and RSRP of the serving cell is a second threshold.
Embodiment 28. The user equipment according to embodiment 27,
   further comprising a receiving unit, configured to receive an interference control message sent by a base station, wherein the interference control message comprises the first threshold and the second threshold.
Embodiment 29. A base station, comprising:
   a determination unit, configured to determine an interfering cell, and obtain a PCI and the number of antenna ports of the interfering cell; and
   a sending unit, configured to send an interference control message to a UE, wherein the interference control message comprises the PCI and the number of antenna ports of the interfering cell,
   so that the UE obtains a CRS location of the interfering cell according to the PCI and the number of antenna ports of the interfering cell; and
   perform interference control according to information of the CRS location.
Embodiment 30. The base station according to embodiment 29, wherein
   the determination unit is configured to receive a measurement report sent by the user equipment UE, wherein the measurement report comprises an RSRP value of a serving cell and an RSRP value of a neighboring cell, and configured to determine at least one neighboring cell whose RSRP value is larger than the RSRP value of the serving cell as the interfering cell, and obtain the PCI and the number of antenna ports of the interfering cell;
   or,
   the determination unit is configured to receive a measurement report sent by the user equipment UE, wherein the measurement report comprises an RSRQ value of a serving cell and an RSRQ value of a neighboring cell, and configured to determine at least one neighboring cell whose RSRQ value is larger than the RSRQ value of the serving cell as the interfering cell, and obtain the PCI and the number of antenna ports of the interfering cell;
   or,
   the determination unit is configured to determine at least one invading neighboring cell as the interfering cell through an invading and victim relationship between a serving cell and another neighboring cell configured by OAM;
   or,
   the determination unit is configured to learn, through that RNTP obtained from a received load indication exceeds a threshold, that downlink interference of a neighboring cell to a UE of the serving cell exists, so as to determine the interfering cell.
Embodiment 31. The base station according to embodiment 30, wherein
   the determination unit is configured to determine a neighboring cell as the interfering cell, wherein a difference between an RSRP value of the neighboring cell and the RSRP value of the serving cell is a second threshold.
Embodiment 32. A user equipment, comprising:
   a sending unit, configured to send a measurement report to a base station, wherein the measurement report comprises an RSRP value of a serving cell and an RSRP value of a neighboring cell, so that the base station determines at least one neighboring cell whose RSRP value is larger than the RSRP value of the serving cell as an interfering cell, and the base station obtains a PCI and the number of antenna ports of the interfering cell;
   a receiving unit, configured to receive an interference control message sent by the base station, wherein the interference control message comprises the PCI and the number of antenna ports of the interfering cell;
   a CRS location obtaining unit, configured to obtain a CRS location of the interfering cell according to the PCI and the number of antenna ports of the interfering cell; and
   an interference control unit, configured to perform interference control according to information of the CRS location.
Embodiment 33. The user equipment according to embodiment 32, wherein
   the sending unit is configured to send the measurement report to the base station, so that the base station determines a neighboring cell as the interfering cell, wherein a difference between an RSRP value of the neighboring cell and the RSRP value of the serving cell is a second threshold.
Embodiment 34. A user equipment, comprising:
   a measurement unit, configured to perform neighboring cell measurement, and select at least one neighboring cell whose signal transmission strength is larger than signal transmission strength of a serving cell from measured neighboring cells as an interfering cell;
   a sending unit, configured to send a request message to a base station for obtaining the number of antenna ports of the interfering cell, wherein the request message carries a PCI of the interfering cell;
   a receiving unit, configured to receive a response message sent by the base station in response to the request message, wherein the response message carries the PCI of the interfering cell and the number of antenna ports of the interfering cell;
   a CRS location obtaining unit, configured to obtain a cell reference signaling CRS location of the interfering cell according to the PCI of the interfering cell and the number of antenna ports of the interfering cell; and
   an interference control unit, configured to perform interference control according to information of the CRS location.
Embodiment 35. The user equipment according to embodiment 34, wherein
   the signal transmission strength is represented by an RSRP or RSRQ value.
Embodiment 36. The user equipment according to embodiment 35, wherein
   before performing the neighboring cell measurement, the measurement unit is further configured to perform signal quality measurement of the serving cell, so as to obtain a measurement value representing signal quality of the serving cell, and perform the neighboring cell measurement when the measurement value is decreased to a value below a first threshold.
Embodiment 37. The user equipment according to embodiment 34, wherein
   the signal quality measurement of the serving cell performed by the measurement unit comprises channel quality index CQI measurement, and the measurement value is a signal to interference plus noise ratio SINR value, or
   the signal quality measurement of the serving cell performed by the measurement unit comprises radio resource management RRM measurement, and the measurement value is a reference signal received quality RSRQ value.
Embodiment 38. The user equipment according to embodiment 36, wherein
   during the neighboring cell measurement, the measurement unit selects at least one neighboring cell from the measured neighboring cells as the interfering cell, wherein a difference between RSRP of the neighboring cell and RSRP of the serving cell is a second threshold.
Embodiment 39. The user equipment according to embodiment 38, wherein
   the receiving unit is further configured to receive an interference control message sent by the base station, wherein the interference control message comprises the first threshold and the second threshold.
Embodiment 40. A base station, comprising:
   an X2 request unit, configured to send an X2 establishment request message to a second base station, wherein the X2 establishment request message carries a PCI and the number of antenna ports of a serving cell of the base station, and/or carries CSI-RS information of the base station,
   so that the second base station obtains a CRS location of the base station according to the PCI and the number of antenna ports of the serving cell of the base station, and determines whether a CRS location of a serving cell in the second base station conflicts with the CRS location of the base station, and/or determines, according to CSI-RS of the base station, whether CSI-RS of the second base station conflicts with the CSI-RS of the base station; and
   a control unit, configured to: when the determination result is that a CRS location conflict and/or a CSI-RS conflict exists, change the PCI of the serving cell of the base station, and/or change the CSI-RS of the base station.
Embodiment 41. The base station according to embodiment 40, further comprising:
   an X2 response unit, configured to receive an X2 establishment response message sent by the second base station, wherein the X2 establishment response message carries request information for requesting the base station to change the PCI of the serving cell of the base station and/or change the CSI-RS of the base station; wherein
   the control unit changes the PCI of the serving cell of the base station and/or changes the CSI-RS of the base station according to the request information for changing the PCI of the serving cell and/or changing the CSI-RS of the base station; and
   a sending unit, configured to send a configuration update message to the second base station, wherein the configuration update message carries the changed PCI of the serving cell of the base station and/or the changed CSI-RS of the base station.
Embodiment 42. The base station according to embodiment 40, further comprising:
   an offset unit, configured to receive a time symbol offset message sent by the second base station, wherein the time symbol offset message carries a time symbol offset value, wherein
   the control unit offsets the PCI of the serving cell of the base station and/or offsets the CSI-RS of the base station according to the time symbol offset value in the time symbol offset message.
Embodiment 43. A base station, comprising:
   a receiving unit, configured to receive an X2 establishment request message sent by a first base station, wherein the X2 establishment request message carries a PCI and the number of antenna ports of a serving cell of the first base station, and/or carries CSI-RS information of the first base station;
   a conflict determination unit, configured to obtain a CRS location of the first base station according to the PCI and the number of antenna ports of the serving cell of the first base station, and determine whether a CRS location of a serving cell in the base station conflicts with the CRS location of the first base station, and/or determine, according to CSI-RS of the first base station, whether CSI-RS of the base station conflicts with the CSI-RS of the first base station; and
   a control unit, configured to: when the determination result is that a CRS location conflict and/or a CSI-RS conflict exists, change the PCI of the serving cell of the base station, and/or change the CSI-RS of the base station.

The foregoing description is merely about the specific embodiments of the present invention, but is not intended to limit the protection scope of the present invention. Any variation or replacement made by persons skilled in the art within the technical scope of the present invention shall all fall within the protection scope of the present invention. Therefore, the scope of the present invention shall be subject to the appended claims.

## Claims

1. An interference control method, comprising:
determining (210), by a base station, an interfering cell, and obtaining a physical cell identifier, PCI, and the number of antenna ports of the interfering cell;
sending (220), by the base station, an interference control message to a user equipment, UE, wherein the interference control message comprises the PCI and the number of antenna ports of the interfering cell,
the PCI and the number of antenna ports of the interfering cell are used by the UE to obtain a cell reference signaling, CRS, location of the interfering cell according to the PCI and the number of antenna ports of the interfering cell, the CRS location is used by the UE to perform interference control according to the CRS location;
wherein the determining (210), by a base station, an interfering cell comprises:
receiving, by the base station, a measurement report sent by the user equipment UE, wherein the measurement report comprises a reference signal receiving power, RSRP, value of a serving cell and a RSRP value of a neighboring cell, and determining at least one neighboring cell whose RSRP value is larger than the RSRP value of the serving cell as the interfering cell;
or,
determining, by the base station, at least one neighboring cell as the interfering cell through an invading and victim relationship between cells that is configured by an operation, administration, and maintenance, OAM, entity;
or,
determining, by the base station, through that relative narrowband TX power, RNTP, obtained from a load indication exceeds a threshold, at least one neighboring cell having downlink interference to a UE of the serving cell as the interfering cell.

2. The method according to claim 1, wherein
the determining, by the base station, at least one neighboring cell whose RSRP value is larger than the RSRP value of the serving cell as the interfering cell comprising: determining a neighboring cell as the interfering cell, wherein a difference between an RSRP value of the neighboring cell and the RSRP value of the serving cell is a second threshold.

3. An interference control method, comprising:
sending, by a user equipment, a measurement report to a base station, wherein the measurement report comprises a reference signal receiving power, RSRP, value of a serving cell and a RSRP value of a neighboring cell, so that the base station determines at least one neighboring cell whose RSRP value is larger than the RSRP value of the serving cell as an interfering cell, and the base station obtains a physical cell identifier, PCI, and the number of antenna ports of the interfering cell;
receiving, by the user equipment, an interference control message sent by the base station, wherein the interference control message comprises the PCI and the number of antenna ports of the interfering cell;
obtaining, by the user equipment, a cell reference signaling, CRS, location of the interfering cell according to the PCI and the number of antenna ports of the interfering cell;
performing, by the user equipment, interference control according to the CRS location.

4. The method according to claim 3, wherein
the sending, by a user equipment, a measurement report to a base station, so that the base station determines at least one neighboring cell whose RSRP value is larger than the RSRP value of the serving cell as an interfering cell comprises: determining a neighboring cell as the interfering cell, wherein a difference between an RSRP value of the neighboring cell and the RSRP value of the serving cell is a second threshold.

5. A base station, comprising:
a determination unit (710), configured to determine an interfering cell, and obtain a physical cell identifier, PCI, and the number of antenna ports of the interfering cell; and
a sending unit (730), configured to send an interference control message to a user equipment, UE, wherein the interference control message comprises the PCI and the number of antenna ports of the interfering cell,
the PCI and the number of antenna ports of the interfering cell are used by the UE to obtain a cell reference signaling, CRS, location of the interfering cell according to the PCI and the number of antenna ports of the interfering cell, the CRS location is used by the UE to perform interference control according to the CRS location;
wherein the determination unit is configured to receive a measurement report sent by the UE, wherein the measurement report comprises a reference signal receiving power, RSRP, value of a serving cell and a RSRP value of a neighboring cell, and configured to determine at least one neighboring cell whose RSRP value is larger than the RSRP value of the serving cell as the interfering cell, and obtain the PCI and the number of antenna ports of the interfering cell;
or,
the determination unit is configured to determine at least one invading neighboring cell as the interfering cell through an invading and victim relationship between a serving cell and another neighboring cell configured by an operation, administration, and maintenance, OAM, entity; or,
the determination unit is configured to learn, through that relative narrowband TX power, RNTP, obtained from a received load indication exceeds a threshold, that downlink interference of a neighboring cell to a UE of the serving cell exists, so as to determine the interfering cell.

6. The base station according to claim 5, wherein
the determination unit is configured to determine a neighboring cell as the interfering cell, wherein a difference between an RSRP value of the neighboring cell and the RSRP value of the serving cell is a second threshold.

7. A user equipment, comprising:
a sending unit (810), configured to send a measurement report to a base station, wherein the measurement report comprises a reference signal receiving power, RSRP, value of a serving cell and an RSRP value of a neighboring cell, so that the base station determines at least one neighboring cell whose RSRP value is larger than the RSRP value of the serving cell as an interfering cell, and the base station obtains a physical cell identifier, PCI, and the number of antenna ports of the interfering cell;
a receiving unit (820), configured to receive an interference control message sent by the base station, wherein the interference control message comprises the PCI and the number of antenna ports of the interfering cell;
a cell reference signaling, CRS, location obtaining unit (830), configured to obtain a CRS location of the interfering cell according to the PCI and the number of antenna ports of the interfering cell;
an interference control unit (840), configured to perform interference control according to the CRS location.

8. The user equipment according to claim 7, wherein
the sending unit (810) is configured to send the measurement report to the base station, so that the base station determines a neighboring cell as the interfering cell, wherein a difference between an RSRP value of the neighboring cell and the RSRP value of the serving cell is a second threshold.

9. Computer readable storage medium, comprising computer program codes which when executed by a computer processor cause the computer processor to execute the steps according to any one of the claims 1 to 4.

## Patentansprüche

1. Störungskontrollverfahren, umfassend:
Bestimmen (210), durch eine Basisstation, einer störenden Zelle und Erhalten eines "Physical Cell Identifier" PCI und der Anzahl der Antennenports der störenden Zelle;
Senden (220), durch die Basisstation, einer Störungskontrollnachricht zu einem Benutzergerät UE, wobei die Störungskontrollnachricht den PCI und die Anzahl der Antennenports der störenden Zelle umfasst,
der PCI und die Anzahl der Antennenports der störenden Zelle werden von dem UE zum Erhalten eines "Cell Reference Signaling"- bzw. CRS-Orts der störenden Zelle gemäß dem PCI und der Anzahl der Antennenports der störenden Zelle verwendet, der CRS-Ort wird von dem UE zum Ausführen von Störungskontrolle gemäß dem CRS-Ort verwendet;
wobei das Bestimmen (210), durch eine Basissation, einer störenden Zelle Folgendes umfasst:
Empfangen, durch die Basisstation, eines durch das Benutzergerät UE gesendeten Messberichts, wobei der Messbericht einen "Reference Signal Receiving Power"- bzw. RSRP-Wert einer versorgenden Zelle und einen RSRP-Wert einer benachbarten Zelle umfasst, und Bestimmen mindestens einer benachbarten Zelle, deren RSRP-Wert größer als der RSRP-Wert der versorgenden Zelle ist, als die störende Zelle;
oder
Bestimmen, durch die Basisstation, mindestens einer benachbarten Zelle als die störende Zelle mittels einer Eindring- und Opfer-Beziehung zwischen Zellen, die durch eine "Operation, Administration and Maintenance"- bzw. OAM-Entität konfiguriert wird;
oder
Bestimmen, durch die Basisstation dadurch, dass eine aus einer Lastangabe erhaltene "Relative Narrow Band TX Power" RNTP eine Schwelle übersteigt, mindestens einer benachbarten Zelle, die Abwärtsstreckenstörung eines UE der versorgenden Zelle aufweist, als die störende Zelle.

2. Verfahren nach Anspruch 1, wobei
das Bestimmen, durch die Basisstation, mindestens einer benachbarten Zelle, deren RSRP-Wert größer als der RSRP-Wert der versorgenden Zelle ist, als die störende Zelle Folgendes umfasst:
Bestimmen einer benachbarten Zelle als die störende Zelle, wobei eine Differenz zwischen einem RSRP-Wert der benachbarten Zelle und dem RSRP-Wert der versorgenden Zelle eine zweite Schwelle ist.

3. Störungskontrollverfahren, umfassend:
Senden, durch ein Benutzergerät eines Messberichts zu einer Basisstation, wobei der Messbericht einen "Reference Signal Receiving Power"- bzw. RSRP-Wert einer versorgenden Zelle und einen RSRP-Wert einer benachbarten Zelle umfasst, so dass die Basisstation mindestens eine benachbarte Zelle, deren RSRP-Wert größer als der RSRP-Wert der versorgenden Zelle ist, als eine störende Zelle bestimmt und die Basisstation einen "Physical Cell Identifier" PCI und die Anzahl der Antennenports der störenden Zelle erhält;
Empfangen, durch das Benutzergerät, einer durch die Basisstation gesendeten Störungskontrollnachricht, wobei die Störungskontrollnachricht den PCI und die Anzahl der Antennenports der störenden Zelle umfasst;
Erhalten, durch das Benutzergerät, eines "Cell Reference Signaling"- bzw. CRS-Orts der störenden Zelle gemäß dem PCI und der Anzahl der Antennenports der störenden Zelle;
Ausführen, durch das Benutzergerät, von Störungskontrolle gemäß dem CRS-Ort.

4. Verfahren nach Anspruch 3, wobei
das Senden, durch ein Benutzergerät, eines Messberichts zu einer Basisstation, so dass die Basisstation mindestens eine benachbarte Zelle, deren RSRP-Wert größer als der RSRP-Wert der versorgenden Zelle ist, als eine störende Zelle bestimmt, Folgendes umfasst: Bestimmen einer benachbarten Zelle als die störende Zelle, wobei eine Differenz zwischen einem RSRP-Wert der benachbarten Zelle und dem RSRP-Wert der versorgenden Zelle eine zweite Schwelle ist.

5. Basisstation, umfassend:
eine Bestimmungseinheit (710), ausgelegt zum Bestimmen einer störenden Zelle und Erhalten eines "Physical Cell Identifier" PCI und der Anzahl der Antennenports der störenden Zelle; und
eine Sendeeinheit (730), ausgelegt zum Senden einer Störungskontrollnachricht zu einem Benutzergerät UE, wobei die Störungskontrollnachricht den PCI und die Anzahl der Antennenports der störenden Zelle umfasst,
der PCI und die Anzahl der Antennenports der störenden Zelle werden von dem UE zum Erhalten eines "Cell Reference Signalling"- CRS-Orts der störenden Zelle gemäß dem PCI und der Anzahl der Antennenports der störenden Zelle verwendet, der CRS-Ort wird von dem UE zum Ausführen von Störungskontrolle gemäß dem CRS-Ort verwendet;
wobei die Bestimmungseinheit ausgelegt ist zum Empfangen eines durch das UE gesendeten Messberichts, wobei der Messbericht einen "Reference Signal Receiving Power"- bzw. RSRP-Wert einer versorgenden Zelle und einen RSRP-Wert einer benachbarten Zelle umfasst, und ausgelegt ist zum Bestimmen mindestens einer benachbarten Zelle, deren RSRP-Wert größer als der RSRP-Wert der versorgenden Zelle ist, als die störende Zelle und Erhalten des PCI und der Anzahl der Antennenports der störenden Zelle;
oder
die Bestimmungseinheit ausgelegt ist zum Bestimmen mindestens einer eindringenden benachbarten Zelle als die störende Zelle mittels einer Eindring- und Opfer-Beziehung zwischen einer versorgenden Zelle und einer anderen benachbarten Zelle, die durch eine "Operation, Administration and Maintenance"- bzw. OAM-Entität konfiguriert ist;
oder
die Bestimmungseinheit ausgelegt ist zum Erfahren dadurch, dass eine aus einer empfangenen Lastangabe erhaltene "Relative Narrowband TX Power" RNTP eine Schwelle übersteigt, dass Abwärtsstreckenstörung einer benachbarten Zelle an einem UE der versorgenden Zelle existiert, um so die störende Zelle zu bestimmen.

6. Basisstation nach Anspruch 5, wobei
die Bestimmungseinheit ausgelegt ist zum Bestimmen einer benachbarten Zelle als die störende Zelle, wobei eine Differenz zwischen einem RSRP-Wert der benachbarten Zelle und dem RSRP-Wert der versorgenden Zelle eine zweite Schwelle ist.

7. Benutzergerät, umfassend:
eine Sendeeinheit (810), ausgelegt zum Senden eines Messberichts zu einer Basisstation, wobei der Messbericht einen "Reference Signal Receiving Power"- bzw. RSRP-Wert einer versorgenden Zelle und einen RSRP-Wert einer benachbarten Zelle umfasst, so dass die Basisstation mindestens eine benachbarte Zelle, deren RSRP-Wert größer als der RSRP-Wert der versorgenden Zelle ist, als eine störende Zelle bestimmt und die Basisstation einen "Physical Cell Indicator" PCI und die Anzahl der Antennenports der störenden Zelle erhält;
eine Empfangseinheit (820), ausgelegt zum Empfangen einer durch die Basisstation gesendeten Störungskontrollnachricht, wobei die Störungskontrollnachricht den PCI und die Anzahl der Antennenports der störenden Zelle umfasst;
eine Erhalteeinheit eines "Cell Reference Signaling"- bzw. CRS-Orts (830), ausgelegt zum Erhalten eines CRS-Orts der störenden Zelle gemäß dem PCI und der Anzahl der Antennenports der störenden Zelle;
eine Störungskontrolleinheit (840), ausgelegt zum Durchführen von Störungskontrolle gemäß dem CRS-Ort.

8. Benutzergerät nach Anspruch 7, wobei
die Sendeeinheit (810) ausgelegt ist zum Senden des Messberichts zu der Basisstation, so dass die Basisstation eine benachbarte Zelle als die störende Zelle bestimmt, wobei eine Differenz zwischen einem RSRP-Wert der benachbarten Zelle und dem RSRP-Wert der versorgenden Zelle eine zweite Schwelle ist.

9. Computerlesbares Speichermedium, das Computerprogrammcodes umfasst, die, wenn sie durch einen Computerprozessor ausgeführt werden, bewirken, dass der Computerprozessor die Schritte nach einem der Ansprüche 1 bis 4 ausführt.

## Revendications

1. Procédé de contrôle d'interférence, comprenant les étapes suivantes :
déterminer (210), par une station de base, une cellule perturbatrice, et obtenir un identificateur de cellule physique, PCI, et le numéro des ports d'antennes de la cellule perturbatrice ;
envoyer (220), par la station de base, un message de contrôle d'interférence à un équipement d'utilisateur, UE, où le message de contrôle d'interférence comprend le PCI et le numéro des ports d'antennes de la cellule perturbatrice,
le PCI et le numéro des parts d'antennes de la cellule perturbatrice sont utilisés par l'UE afin d'obtenir un emplacement de signalisation de référence de cellule, CRS, de la cellule perturbatrice conformément au PCI et au numéro des ports d'antennes de la cellule perturbatrice, l'emplacement CRS est utilisé par l'UE afin d'effectuer un contrôle d'interférence conformément à l'emplacement CRS ;
où la détermination (210), par une station de base, d'une cellule perturbatrice comprend les étapes suivantes :
recevoir, par la station de base, un rapport de mesure envoyé par l'équipement d'utilisateur, UE, où le rapport de mesure comprend une valeur de puissance de réception de signal de référence, RSRP, d'une cellule de desserte et une valeur RSRP d'une cellule avoisinante, et déterminer au moins une cellule avoisinante dont la valeur RSRP est plus grande que la valeur RSRP de la cellule de desserte comme étant la cellule perturbatrice ;
ou
déterminer, par la station de base, au moins une cellule avoisinante comme étant la cellule perturbatrice à travers une relation envahissante et victime entre des cellules qui est configurée par une entité d'exploitation, d'administration et de maintenance,
OAM ;
ou
déterminer, par la station de base, par l'intermédiaire d'une puissance d'émission en bande étroite relative, RNTP, obtenue à partir d'une indication de charge qui dépasse un seuil, au moins une cellule avoisinante ayant une interférence de liaison descendante vers un UE de la cellule de desserte comme étant la cellule perturbatrice.

2. Procédé selon la revendication 1, dans lequel :
la détermination, par la station de base, d'au moins une cellule avoisinante dont la valeur RSRP est plus grande que la valeur RSRP de la cellule de desserte comme étant la cellule perturbatrice comprend de déterminer une cellule avoisinante comme étant la cellule perturbatrice, où une différence entre une valeur RSRP de la cellule avoisinante et la valeur RSRP de la cellule de desserte est un second seuil.

3. Procédé de contrôle d'interférence, comprenant les étapes suivantes :
envoyer, par un équipement d'utilisateur, un rapport de mesure à une station de base, où le rapport de mesure comprend une valeur de puissance de réception de signal de référence, RSRP, d'une cellule de desserte et une valeur RSRP d'une cellule avoisinante, de manière à ce que la station de base détermine au moins une cellule avoisinante dont la valeur RSRP est plus grande que la valeur RSRP de la cellule de desserte comme étant une cellule perturbatrice, et la station de base obtient un identificateur de cellule physique, PCI, et le numéro des ports d'antennes de la cellule perturbatrice ;
recevoir, par l'équipement d'utilisateur, un message de contrôle d'interférence envoyé par la station de base, où le message de contrôle d'interférence comprend le PCI et le numéro des ports d'antennes de la cellule perturbatrice ;
obtenir, par l'équipement d'utilisateur, un emplacement de signalisation de référence de cellule, CRS, de la cellule perturbatrice conformément au PCI et au numéro des ports d'antennes de la cellule perturbatrice ;
effectuer, par l'équipement d'utilisateur, un contrôle d'interférence conformément à l'emplacement CRS.

4. Procédé selon la revendication 3, dans lequel
l'envoi, par un équipement d'utilisateur, d'un rapport de mesure à une station de base, de manière à ce que la station de base détermine au moins une cellule avoisinante dont la valeur RSRP est plus grande que la valeur RSRP de la cellule de desserte comme étant une cellule perturbatrice comprend de déterminer une cellule avoisinante comme étant la cellule perturbatrice, où une différence entre une valeur RSRP de la cellule avoisinante et la valeur RSRP de la cellule de desserte est un second seuil.

5. Station de base comprenant :
une unité de détermination (710), configurée pour déterminer une cellule perturbatrice, et obtenir un identifiant de cellule physique, PCI, et le numéro des ports d'antennes de la cellule perturbatrice ; et
une unité d'envoi (730), configurée pour envoyer un message de contrôle d'interférence à un équipement d'utilisateur, UE, où le message de contrôle d'interférence comprend le PCI et le numéro des ports d'antennes de la cellule perturbatrice,
le PCI et le numéro des ports d'antennes de la cellule perturbatrice sont utilisés par l'UE afin d'obtenir un emplacement de signalisation de référence de cellule, CRS, de la cellule perturbatrice conformément au PCI et au numéro des ports d'antennes de la cellule perturbatrice, l'emplacement CRS est utilisé par l'UE pour effectuer un contrôle d'interférence conformément à l'emplacement CRS ;
où l'unité de détermination est configurée pour recevoir un rapport de mesure envoyé par l'UE, où le rapport de mesure comprend une valeur de puissance de réception de signal de référence, RSRP, d'une cellule de desserte et une valeur RSRP d'une cellule avoisinante, et est configurée pour déterminer au moins une cellule avoisinante dont la valeur RSRP est plus grande que la valeur RSRP de la cellule de desserte comme étant la cellule perturbatrice , et obtenir le PCI et le numéro des ports d'antennes de la cellule perturbatrice;
ou
l'unité de détermination est configurée pour déterminer au moins une cellule avoisinante envahissante comme étant la cellule perturbatrice à travers une relation envahissante et victime entre une cellule de desserte et une autre cellule avoisinante configurée par une entité d'exploitation, d'administration et de maintenance, OAM ;
ou
l'unité de détermination est configurée pour apprendre, par l'intermédiaire d'une puissance d'émission en bande étroite relative, RNTP, obtenue à partir d'une indication de charge reçue qui dépasse un seuil, qu'il existe une interférence de liaison descendante d'une cellule avoisinante vers un UE de la cellule de desserte, de manière à déterminer la cellule perturbatrice.

6. Station de base selon la revendication 5, dans laquelle :
l'unité de détermination est configurée pour déterminer une cellule avoisinante comme étant la cellule perturbatrice, où une différence entre une valeur RSRP de la cellule avoisinante et la valeur RSRP de la cellule de desserte est un second seuil.

7. Équipement d'utilisateur comprenant :
une unité d'envoi (810), configurée pour envoyer un rapport de mesure à une station de base, où le rapport de mesure comprend une valeur de puissance de réception de signal de référence, RSRP, d'une cellule de desserte et une valeur RSRP d'une cellule avoisinante, de manière à ce que la station de base détermine au moins une cellule avoisinante dont la valeur RSRP est plus grande que la valeur RSRP de la cellule de desserte comme étant une cellule perturbatrice, et la station de base obtient un identifiant de cellule physique, PCI, et le numéro des ports d'antennes de la cellule perturbatrice ;
une unité de réception (820), configurée pour recevoir un message de contrôle d'interférence envoyé par la station de base, où le message de contrôle d'interférence comprend le PCI et le numéro des ports d'antennes de la cellule perturbatrice ;
une unité d'obtention d'emplacement de signalisation de référence de cellule, CRS, (830) configurée pour obtenir un emplacement CRS de la cellule perturbatrice conformément au PCI et au numéro des ports d'antennes de la cellule perturbatrice ; une unité de contrôle d'interférence (840), configurée pour effectuer un contrôle d'interférence conformément à l'emplacement CRS.

8. Équipement d'utilisateur selon la revendication 7, dans lequel l'unité d'envoi (810) est configurée pour envoyer le rapport de mesure à la station de base, de manière à ce que la station de base détermine une cellule avoisinante comme étant la cellule perturbatrice, où une différence entre une valeur RSRP de la cellule avoisinante et la valeur RSRP de la cellule de desserte est un second seuil.

9. Support de stockage lisible par ordinateur, comprenant des codes de programme informatique qui, lorsqu'ils sont exécutés par un processeur informatique, amènent le processeur informatique à exécuter les étapes selon l'une quelconque des revendications 1 à 4.
